Europäisches Patentamt

(19) European Patent Office

Office européen des brevets

(11) Numéro de publication : **0 298 826 B1**

(12) **FASCICULE DE BREVET EUROPEEN**

(45) Date de publication du fascicule du brevet :
31.07.91 Bulletin 91/31

(21) Numéro de dépôt : **88401610.6**

(22) Date de dépôt : **24.06.88**

(51) Int. Cl.⁵ : $B64C\ 27/46$

---

(54) **Pale à extrémité courbe pour voilure tournante d'aéronef.**

(30) Priorité : **29.06.87 FR 8709150**

(43) Date de publication de la demande :
**11.01.89 Bulletin 89/02**

(45) Mention de la délivrance du brevet :
**31.07.91 Bulletin 91/31**

(84) Etats contractants désignés :
**DE ES GB IT NL**

(56) Documents cités :
**EP-A- 0 067 097**
**GB-A- 2 067 493**
**US-A- 3 411 738**
**US-A- 4 334 828**

(73) Titulaire : **AEROSPATIALE SOCIETE
NATIONALE INDUSTRIELLE Société
Anonyme dite:
37, Boulevard de Montmorency
F-75016 Paris (FR)
Titulaire : OFFICE NATIONAL D'ETUDES ET
DE RECHERCHES
AEROSPATIALES(O.N.E.R.A.)
29, avenue de la Division Leclerc
F-92322 Châtillon Cédex (FR)**

(72) Inventeur : **Vuillet, Alain Eric
22, rue de la Sophoras
La Bergerie F-13320 Bouc Belair (FR)**
Inventeur : **Philippe, Jean Jacques
31, Pierre Curie
F-78000 Versailles (FR)**
Inventeur : **Desopper, André
161 rue Buzenval
F-92380 Garches (FR)**

(74) Mandataire : **Bonnetat, Christian et al
CABINET BONNETAT 23, Rue de Léningrad
F-75008 Paris (FR)**

## Description

La présente invention concerne une pale pour voilure tournante d'aéronef et plus particulièrement l'extrémité d'une telle pale.

On sait que, aussi bien en vol stationnaire qu'en vol d'avancement, l'extrémité des pales d'un rotor d'aéronef à voilure tournante, notamment un hélicoptère, a une influence importante sur le fonctionnement aérodynamique du rotor. En effet, l'extrémité des pales constitue la zone dans laquelle apparaissent les plus grandes pressions dynamiques et des tourbillons marginaux, générateurs de pertes de puissance et de bruit.

L'amélioration des extrémités de pales peut se traduire par une amélioration notable des performances de l'aéronef. C'est pour cela que de nombreuses études ont été effectuées à ce sujet.

Par exemple, dans le brevet français FR-A-2473983, on décrit une pale d'hélicoptère dont l'extrémité est effilée en flèche vers l'arrière et, de plus, inclinée vers le bas. L'envergure totale de la pale étant égale à R, cette extrémité s'étend sur une envergure de 0,07 R et est pliée autour d'une corde de la pale disposée à 0,04 R du bord extrême de la pale. La totalité de la partie la plus extérieure de la pale forme, par rapport au reste de ladite pale, un angle dièdre, dirigé vers le bas et dont la valeur est choisie égale à 20°.

Ainsi, la pale décrite dans le brevet précité comporte une cassure nette à une distance de l'axe de rotation égale à 0,96 R.

Grâce à une telle cassure vers le bas, de l'extrémité de pale, l'auteur de ce brevet revendique une amélioration des performances de la pale en vol stationnaire. En effet, il explique que le dièdre d'extrémité de pale permet d'émettre le tourbillon d'extrémité plus bas que lorsque l'extrémité de pale est alignée avec le reste de la pale. Par suite, lors du passage de la pale suivante de la voilure à l'emplacement du tourbillon engendré par la pale précédente, ce tourbillon se trouve plus éloigné de cette pale suivante, de sorte que l'interaction entre celle-ci et le tourbillon de pale précédente est diminuée. Des résultats d'essais en vol stationnaire publiés postérieurement par l'auteur de ce brevet confirment des gains de puissance, à masse égale et en vol stationnaire, de l'ordre de 2 à 4%, dus au seul dièdre d'extrémité de pale.

Par ailleurs, le brevet US-A-3411738 décrit une pale pour voilure tournante d'aéronef comportant une attache de fixation à un moyeu, une partie courante ayant un bord d'attaque et un bord de fuite et dont le profil a une corde de longueur constante ou évolutive, et une extrémité qui prolonge ladite partie courante vers l'extérieur et dont le bord d'attaque prolonge en flèche vers l'arrière le bord d'attaque de ladite partie courante, ladite extrémité étant de plus inclinée vers le bas sur la totalité de l'envergure de cette extrémité et est continue depuis le raccord avec la partie courante de pale jusqu'au bord extrême de ladite extrémité de sorte que celle-ci suit une courbure telle que son extrados est convexe et son intrados est concave.

La présente invention a pour objet de perfectionner une pale pour voilure tournante à extrémité inclinée vers le bas afin non seulement d'en améliorer encore les performances en vol stationnaire, mais également et surtout d'obtenir de meilleures performances en vol d'avancement.

A cette fin, selon l'invention, la pale pour voilure tournante d'aéronef comportant une attache de fixation à un moyeu, une partie courante ayant un bord d'attaque et un bord de fuite et dont le profil a une corde de longueur constante ou évolutive C, et une extrémité dont l'envergure est inférieure à 10% de l'envergure totale de la pale, qui prolonge ladite partie courante vers l'extérieur et dont le bord d'attaque prolonge en flèche vers l'arrière le bord d'attaque de ladite partie courante, ladite extrémité étant de plus inclinée vers le bas, l'inclinaison vers le bas de ladite extrémité de pale s'étendant sur la totalité de l'envergure de cette extrémité et étant continue depuis le raccord avec la partie courante de pale jusqu'au bord extrême de ladite extrémité de sorte que celle-ci suit une courbure telle que son extrados est convexe et son intrados est concave, ladite pale étant rapportée à un système d'axes orthogonaux Ox, Oy et Oz, dont l'origine 0 se trouve au raccord de la ligne de référence de ladite partie courante de pale et de la ligne de référence de ladite extrémité de pale, l'axe Ox étant aligné avec la ligne de référence de ladite partie courante et étant orienté vers l'extérieur de la pale, tandis que l'axe Oy est confondu avec la corde du profil de raccord entre ladite partie courante et ladite extrémité et est orienté du bord d'attaque vers le bord de fuite et que l'axe Oz est orienté vers le haut, c'est-à-dire de l'intrados vers l'extrados de la pale, est caractérisée en ce que ladite ligne de référence de ladite extrémité de pale est contenue dans un plan xOY passant par l'axe Ox et dont la trace OY dans le plan yOz fait un angle $\gamma$ avec l'axe Oy et en ce que, dans le plan xOy, l'équation de ladite ligne de référence de l'extrémité de pale est une fonction d'allure parabolique dans laquelle le coefficient du terme de plus haut degré dépend dudit angle $\gamma$.

Ainsi, dans la pale conforme à l'invention, l'extrémité n'est pas pliée autour d'une corde sur une partie de son envergure, mais au contraire est incurvée progressivement de façon parabolique vers le bas sur toute son envergure. Des essais en soufflerie ont montré que cette incurvation continue est favorable aussi bien en vol stationnaire qu'en vol d'avancement. En vol stationnaire, par rapport à une pale ayant une extrémité rectiligne et rectangulaire, la pale selon l'invention permet, à masse égale de l'aéronef, un gain de puissance d'au moins 5%.

2

EP 0 298 826 B1

De même, en vol de croisière et à grande vitesse, par rapport à cette même pale à extrémité rectiligne et rectangulaire, la pale selon l'invention procure, à masse et vitesse égales, un gain de puissance d'au moins 5%.

Pour expliquer ces gains de performances, aussi bien en vol stationnaire qu'en vol d'avancement, les demandeurs supposent qu'un tourbillon d'extrémité engendré par une pale tourne principalement autour d'un axe sensiblement orthogonal à l'axe de rotation de la voilure tournante, de sorte que les vitesses induites par un tel tourbillon deviennent sensiblement tangentes à l'extrémité incurvée selon l'invention des pales et qu'un tourbillon ne présente plus de composante de vitesse induite qui soit orthogonale aux pales et susceptible de modifier l'incidence de celles-ci. Bien entendu, la présente explication n'est avancée qu'à titre d'hypothèse, dont la justesse ne saurait conditionner la validité de la présente invention.

On remarquera que, selon l'invention, non seulement on communique à ladite extrémité de pale une courbure d'allure parabolique vers le bas, mais encore on donne au bord d'attaque de cette extrémité une forme en flèche au moins sensiblement parabolique (aux distorsions près dues à l'éventuel vrillage). Une telle forme parabolique du bord d'attaque a pour effet de donner un angle de flèche local augmentant progressivement, mais fortement, avec l'envergure de pale. Cet effet de flèche progressivement permet de diminuer la trainée de pale. De plus, il résulte de la forme parabolique du bord d'attaque de ladite extrémité de pale que la corde de cette extrémité de pale diminue progressivement avec l'envergure, de sorte que l'on diminue de façon significative la surface mouillée de l'extrémité de pale, ce qui contribue également à la diminution des trainées locales. Il en résulte de plus une diminution des tourbillons marginaux et donc une diminution des interactions de ceux-ci avec la pale suivante de la voilure.

On voit que, en ajustant la valeur de l'angle $\gamma$, on peut optimiser les performances de la pale conforme à l'invention.

De préférence, dans le plan x0Y, l'équation de ladite ligne de référence de l'extrémité de pale est de la forme :

$$\frac{Y}{C} = (1 - \frac{d}{c})\,(1 - \alpha)\,f\,(\gamma)\,(\frac{x}{a})^n$$

expression dans laquelle :

- C est la longueur de la corde du profil de raccord entre la partie courante de la pale et la partie d'extrémité de ladite pale,
- d la longueur de la corde choisie pour le profil extrême de la partie d'extrémité de la pale,
- $\alpha$ un coefficient définissant la position en corde de pale de la ligne de référence avec $0,2 \leq\ \leq 0,3$ ; ce coefficient étant habituellement choisi égal à 0,25 ;
- $f(\gamma)$ est une fonction trigonométrique de l'angle $\gamma$, par exemple égale à $\dfrac{1}{\cos\alpha}$
- $a$ est l'envergure de ladite extrémité de pale ;
- $n$ est un exposant compris entre 1,5 et 3 et de préférence choisi égal à 2 et dans ce cas la ligne de référence de ladite extrémité de pale est une parabole pure.

L'angle $\gamma$ peut être compris entre 0 à 90° et, de préférence, entre 15° et 30°. Par ailleurs, l'envergure $a$ de l'extrémité de pale est inférieure ou égale à 1,5 C, mais supérieure ou égale à 0,5 C. De préférence, cette envergure $a$ est au moins sensiblement égale à 0,8 C.

Pour pouvoir bénéficier des avantages mentionnés ci-dessus relatifs à la mise en flèche parabolique du bord d'attaque de ladite extrémité de pale, il est avantageux que la corde $d$ du profil extrême de ladite extrémité de pale soit comprise entre 0,2 C et 0,6 C.

Dans le cas où le bord de fuite de ladite extrémité de pale est aligné avec le bord de fuite de la partie courante de pale, la corde dudit profil extrême de l'extrémité de pale est avantageusement choisie égale à $\frac{C}{3}$. En revanche, lorsque ce bord de fuite est en flèche par rapport au bord de fuite de la partie courante de pale, la corde dudit profil extrême est choisie au plus égale à $\frac{C}{2}$.

Comme cela a été mentionné ci-dessus, la pale selon l'invention peut être vrillée de façon connue le long de son envergure. Le vrillage théorique, depuis l'attache de fixation au moyeu jusqu'à, et y compris, ladite extrémité peut être compris entre −8° et −16° et être choisi de préférence égal à −12°. Ladite extrémité est de préférence vrillée de façon identique à la partie courante de pale.

Par ailleurs, les profils de la pale selon l'invention peuvent avoir une épaisseur relative comprise entre 6% et 13% et, de préférence, entre 6% et 9% pour ladite extrémité de pale.

Les figures du dessin annexé feront bien comprendre comment l'invention peut être réalisée. Sur ces figu-

3

res, des références identiques désignent des éléments identiques.

La figure 1 est une vue en perspective schématique d'une pale de rotor d'hélicoptère pourvue d'une extrémité de pale conforme à la présente invention dans le cas particulier où le coefficient $\alpha$ de position en corde de l'axe de variation commandée du pas est choisi égal à 0,25.

La figure 2 est une vue en plan schématique de l'extrémité de pale selon l'invention.

La figure 3 illustre la variation des cordes de l'extrémité selon l'invention en fonction de l'envergure.

La figure 4 illustre la variation de l'angle de flèche du bord d'attaque de l'extrémité selon l'invention en fonction de l'envergure.

Les figures 5 à 7 illustrent, respectivement en projection dans trois plans orthogonaux, la ligne de référence de ladite extrémité de pale.

La figure 8 montre cette ligne de référence dans son plan.

La figure 9 donne l'évolution de l'angle de courbure de l'extrémité selon l'invention en fonction de l'envergure.

Les figures 10 et 14 donnent les résultats d'essais comparatifs de la pale selon l'invention avec deux autres pales.

Les figures 11 à 13 donnent des résultats de calculs comparatifs de la pale selon l'invention avec deux autres pales.

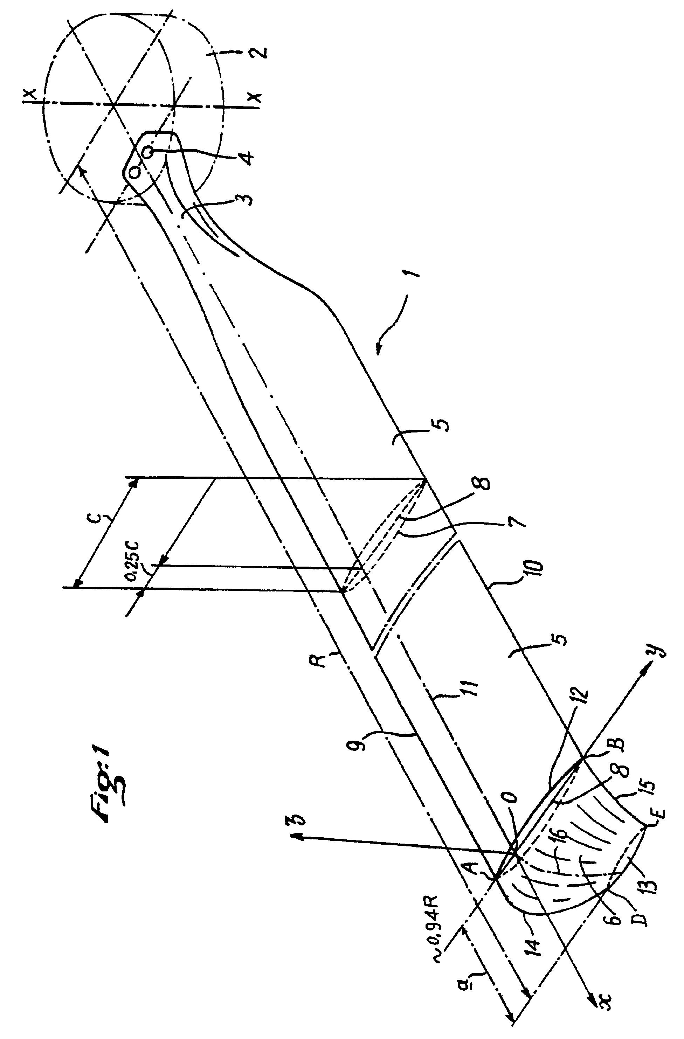

La pale 1, conforme à la présente invention et montrée par la figure 1, fait partie d'un rotor dont le moyeu 2 est illustré de façon purement schématique et dont les autres pales ne sont pas représentées. Ce rotor peut tourner autour d'un axe X-X. Il comporte des organes d'articulation et de retenue des pales et particulièrement une articulation de changement de pas pour chaque pale autour d'un axe dit de variation commandée du pas.

La pale 1 comporte une attache 3 pourvue de moyens 4 pour sa fixation audit moyeu 2, une partie courante 5 prolongeant ledit talon 3 vers l'extérieur et une partie d'extrémité 6 conforme à l'invention et aménagée à l'extrémité de la partie courante 5 opposée à l'attache 3.

La partie courante 5 de la pale 1, qui représente la plus grande longueur de celle-ci, présente une section droite sensiblement identique tout le long de ladite partie courante et correspondant à un profil 7 dont la corde 8 a une longueur constante $\underline{C}$ mais pourrait également être dotée d'une corde évolutive de longueur variable, la longueur de la corde de la section de raccordement ayant une valeur $\underline{c}$ et/ou de profils évolutifs en forme et/ou en épaisseur relative.

Le long de la partie courante 5 de la pale 1 est définie une ligne de référence confondue avec l'axe de variation commandée de la pale en pas dans le moyeu 2.

Dans l'exemple de la figure 1 cette ligne de référence se situe à 25% de la longueur choisie constante $\underline{c}$ de la corde 8 à partir du bord d'attaque.

De plus, de façon usuelle, la partie courante 5 de la pale 1 peut être vrillée longitudinalement autour, par exemple de la ligne de référence 11.

La pale 1 présente une envergure totale égale à R et, par exemple, l'extrémité de pale 6 commence à une distance qui, mesurée à partir de l'axe X-X, est de l'ordre de 0,94 R, l'envergure $\underline{a}$ de cette extrémité de pale 6 étant alors de l'ordre de 0,06 R.

L'extrémité de pale 6 est raccordée à l'extrémité extérieure de la partie courante 5 le long d'une section droite 12, identique à une section droite du profil extrême de la partie courante 5 et correspondant donc à un profil 7 dont la corde 8 à une longueur C. A son extrémité opposée à la partie courante 5, l'extrémité de pale 6 est délimitée par un profil extrême 13 plus petit et plus bas que le profil de la section droite 12. En effet, dans cette extrémité de pale 6, d'une part, le bord d'attaque 14 est courbe et se rapproche du bord de fuite 15 en se dirigeant vers l'extérieur et, d'autre part, on prévoit une courbure du côté de l'intrados de ladite pale.

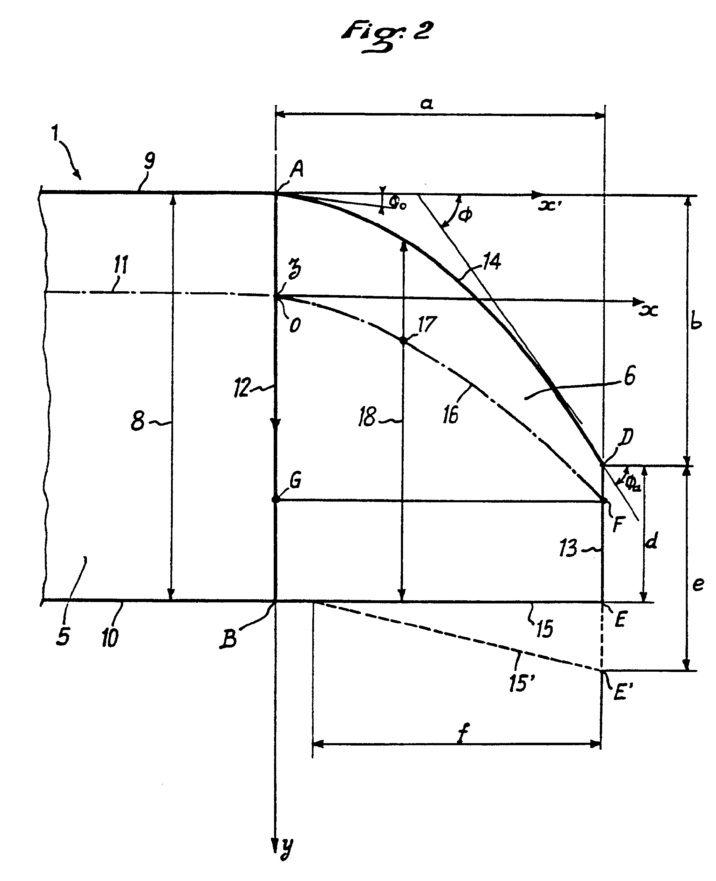

Sur la figure 2, on a représenté la forme de l'extrémité de pale 6, lorsque celle-ci est projetée sur le plan contenant, avant vrillage de la pale, le bord d'attaque 9, le bord de fuite 10 et la ligne de référence 11. Les points de bord d'attaque et de bord de fuite du profil 12, qui se trouvent respectivement à la jonction des bords d'attaque 9 et 14 et à la jonction des bords de fuite 10 et 15, y sont respectivement désignés par A et B. Les points de bord d'attaque et de bord de fuite du profil extrême 13 sont respectivement désignés par D et E. De plus, on a désigné par 0 le point de rencontre entre la ligne 11 et la corde 8 du profil 12 et, par la référence 16, la ligne courbe qui représente le lieu géométrique des points 17 situés, sur les cordes des profils 18 de l'extrémité 6, à une distance de 25% du bord d'attaque 14 (cette distance étant rapportée à la longueur desdites cordes). La ligne courbe 16 prolonge la ligne 11 et coupe la corde du profil extrême 13 en F. Le point F se projette en G sur la corde 8 du profil 12, en projection parallèle aux lignes 9, 10 et 11.

L'envergure $\underline{a}$ de l'extrémité 6 est choisie de façon que :

$$0{,}5\,C \le \quad \underline{a} \le 1{,}5\,C, \text{ avec de préférence}$$
$$\underline{a} = 0{,}8\,C$$

Par ailleurs, le recul $\underline{b}$ du point D par rapport au point A, transversalement à la pale 1, est avantageusement défini par :

$$0,4\ C \leq \underline{b} \leq 0,8\ C$$

Par suite, si, comme cela est représenté en trait plein sur la figure 2, le bord de fuite 15 de l'extrémité le pale 6 est aligné avec le bord de fuite 10 de la partie courante 5, la longueur $\underline{d}$ de la corde du profil 13 est défini par

$$0,2\ C \leq \underline{d} \leq 0,6\ C$$

De préférence, on choisit $d = \dfrac{C}{3}$

Cependant, comme cela est représenté par les pointillés 15′ de la figure 2, le bord de fuite 15 peut être disposé en flèche par rapport au bord de fuite 10, de sorte que le point E se trouve alors en E′. Dans ce cas, la longueur $\underline{e}$ de la corde du profil 13 est avantageusement égale à $\dfrac{C}{2}$, mais la longueur $\underline{f}$ du bord de fuite 15′ est alors inférieure à l'envergure $\underline{a}$ de l'extrémité de pale 6.

Sur les figures 1 et 2, on a représenté un système d'axes orthogonaux qui a pour origine le point 0 et dont:
— l'axe 0x prolonge en alignement la ligne de référence 11 vers l'extérieur ;
— l'axe 0y est confondu avec la corde 8 du profil 12 et est orienté des bords d'attaque 9,14 vers les bords de fuite 10, 15 ;
— l'axe 0z est dirigé vers le haut.

De plus, sur la figure 2, on a indiqué un axe Ax′, parallèle à l'axe 0x et orienté également vers l'extérieur. Dans le système d'axes Ax′, Ay, la ligne de bord d'attaque 14 de l'extrémité 6 a par exemple pour équation, celle de la parabole dans le cas particulier où n = 2 et que $\alpha$ = 0,25, $\underline{a}$ = 0,8 c, b = $\dfrac{2}{3}$ c et d = $\dfrac{c}{3}$

$$\frac{Y}{C} = \frac{2}{3} \left(\frac{x'}{0,8C}\right)^2$$

Il en résulte alors :
— que la corde $\underline{c}$ des profils 18 de l'extrémité 6 suit la loi parabolique :

$$\frac{c}{C} = 1 - \frac{2}{3} \left(\frac{x'}{0,8C}\right)^2$$

— et que l'angle de flèche $\phi$ du bord d'attaque 14 est donné par

$$\phi = \text{arc tg } \frac{5}{3}\left(\frac{x'}{0,8C}\right)$$

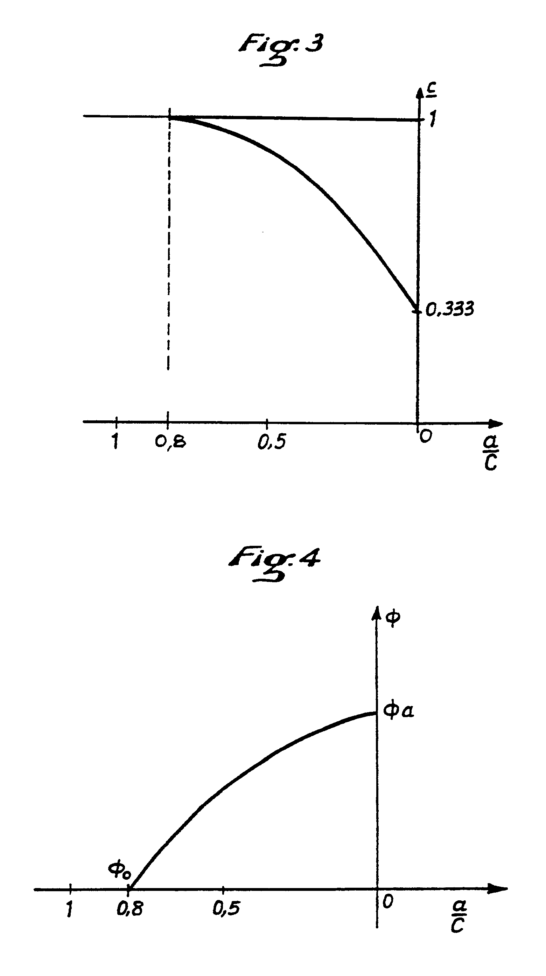

Sur les figures 3 et 4, on a respectivement représenté, en fonction de l'envergure $\underline{a}$ de l'extrémité 6 (rapportée à la corde C des profils 7) l'évolution de la corde $\underline{c}$ des profils 18 (dans le cas où le bord de fuite 15 est aligné avec le bord de fuite 10) et l'évolution de l'angle de flèche $\phi$ du bord d'attaque 14. Ce dernier angle varie d'une valeur $\phi_0$ nulle au point A à une valeur $\phi_a$, par exemple de l'ordre de 60°, au point D.

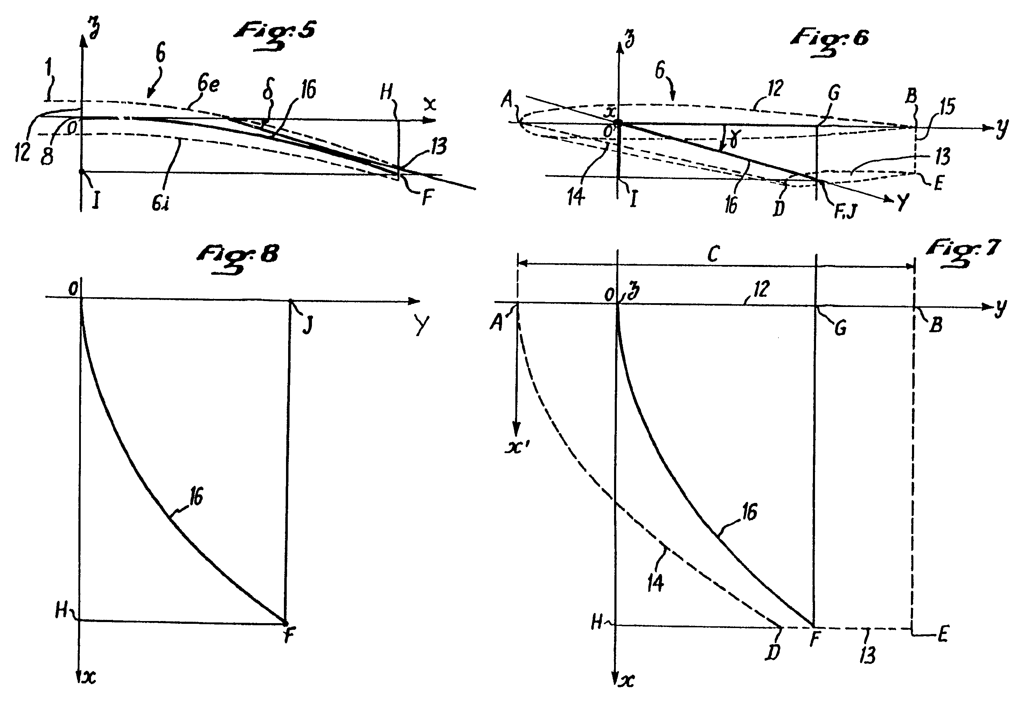

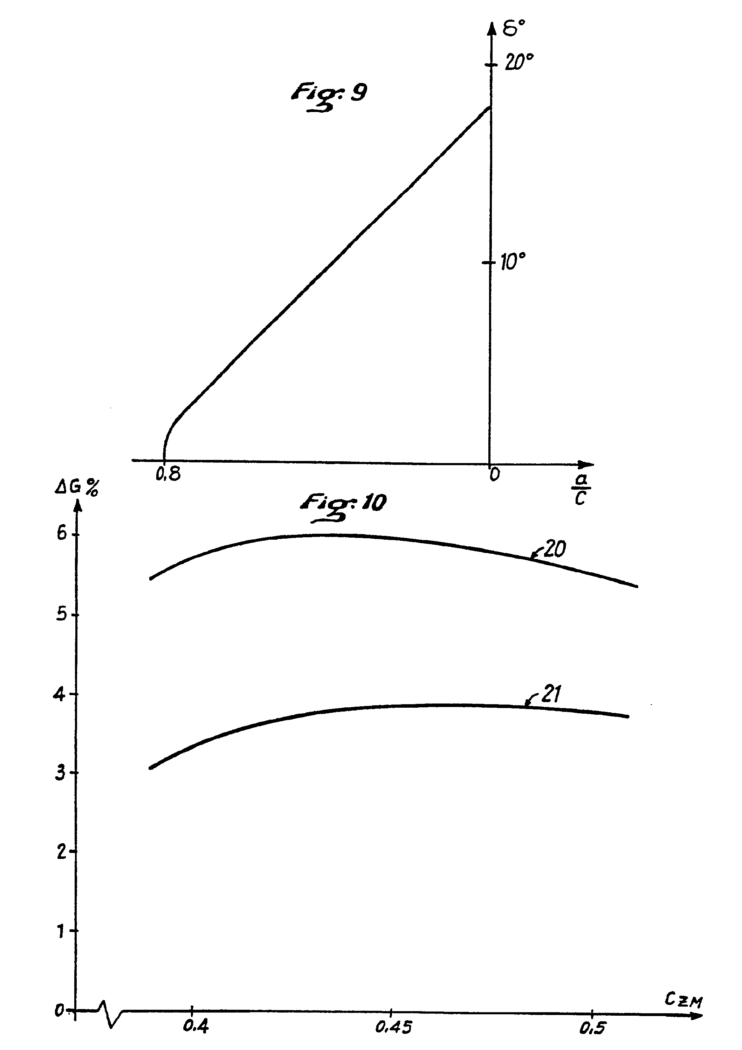

Sur les figures 5 à 7, on a représenté la ligne 16, respectivement dans les plans x0z, y0z, x0y. Comme on peut le voir, cette ligne 16 est contenue dans un plan x0Y, faisant un angle $\gamma$ avec l'axe 0y (voir également la figure 8).

Sur les figures 5 à 8, on a indiqué les différents points A, B, D, E, F et G de la figure 2 ou leur projection dans le système d'axes 0x, y, z, ainsi que la projection, parallèlement à l'axe 0x, du point F sur l'axe 0Y, défini comme la trace du plan x0Y dans le plan y0z.

Comme on peut le voir sur la figure 5, l'extrados $\underline{6e}$ et l'intrados $\underline{6i}$ de l'extrémité 6 sont courbes et respectivement convexe et concave.

Si la ligne de bord d'attaque 14 a l'équation donnée à titre d'exemple ci-dessus, la ligne 16 a pour équation:

$$1)\frac{z}{C} = -\frac{\text{tg}\gamma}{2} \left(\frac{x}{0,8C}\right)^2 \text{ dans le plan x0z (voir la figure 5) ; et}$$

2) $\dfrac{y}{C} = \dfrac{1}{2} (\dfrac{x}{0,8C})^2$ dans le plan x0y (voir la figure 7) ; et

3) $\dfrac{Y}{C} = \dfrac{1}{2\cos^{\gamma}} (\dfrac{x}{0,8C})^2$ dans le plan x0Y (voir la figure 8).

Si l'on trace l'évolution de l'angle courbure de la ligne 16 dans le plan x0z en fonction de l'envergure a (rapportée à C), on obtient une courbe dont l'allure est illustrée sur la figure 9.

Pour pouvoir juger des performances de la pale 1 selon l'invention décrite ci-dessus, on a effectué des essais comparatifs, d'une part avec une pale P1 identique en tous points à la pale 1 sauf en ce qui concerne l'extrémité courbe 6 qui est remplacée par une extrémité rectangulaire de section identique à celle de la partie courante 5 et, d'autre part, avec une pale P2, également identique en tous points à la pale 1 sauf en ce qui concerne l'extrémité courbe 6 qui est remplacée par une extrémité de forme en plan identique, mais non incurvée vers le bas. Ainsi, les essais comparant les pales 1 et P1 permettent de déterminer l'influence combinée de la courbure de l'extrémité 6 et du bord d'attaque parabolique 14, tandis que les essais comparant les pales 1 et P2 permettent de déterminer l'influence de la seule courbure de l'extrémité 6.

La figure 10 montre les résultats d'essais en soufflerie donnant les gains de puissance ΔG (en %) en fonction de la portance réduite Czm, calculée comme étant égale à l'expression

$$\dfrac{3T}{\dfrac{1}{2}\, \rho\, bCRU^2},$$

dans laquelle :

- T est la poussée du rotor auquel appartient la pale ;
- ρ est la masse volumique de l'air ;
- b est le nombre de pales du rotor ;
- C est la corde de la pale ;
- R est le rayon de la pale et
- U la vitesse périphérique de pale.

Cette portance réduite de pale correspond à la charge moyenne par pale et est parfois exprimée sous la forme américaine $6\,\dfrac{CT}{\sigma}$.

Sur cette figure 10, la courbe 21 correspond à la comparaison des pales 1 et P1 et la courbe 20 correspond à la comparaison des pales 1 et P2. On voit ainsi que, en vol stationnaire, la courbure de l'extrémité 6 produit à elle seule un gain de puissance de 3 à 4% (courbe 21), alors que la combinaison de la courbure de l'extrémité 6 et du bord d'attaque parabolique 14 permet un gain de 5 à 6% (courbe 20).

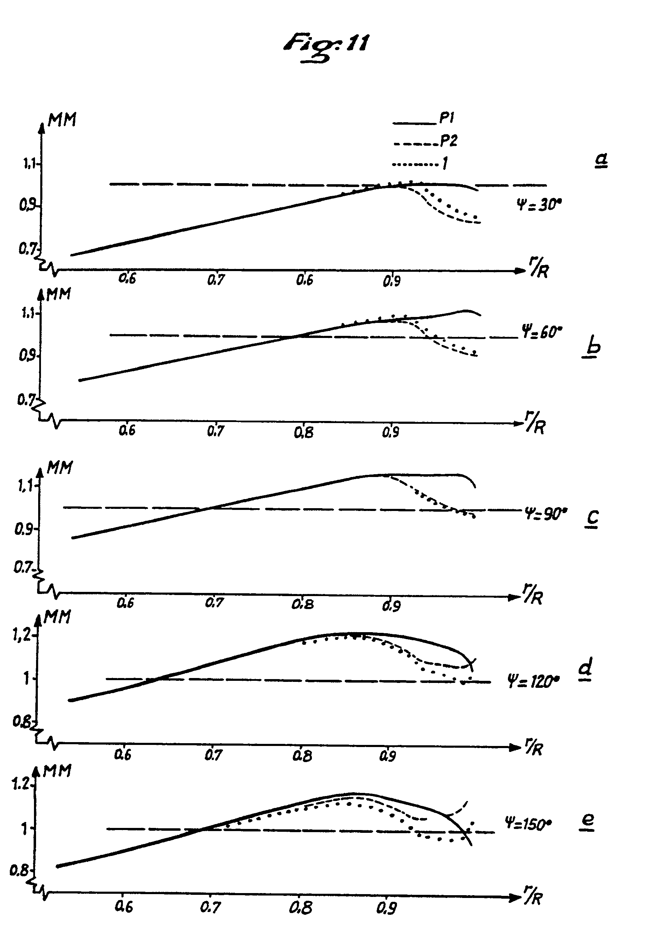

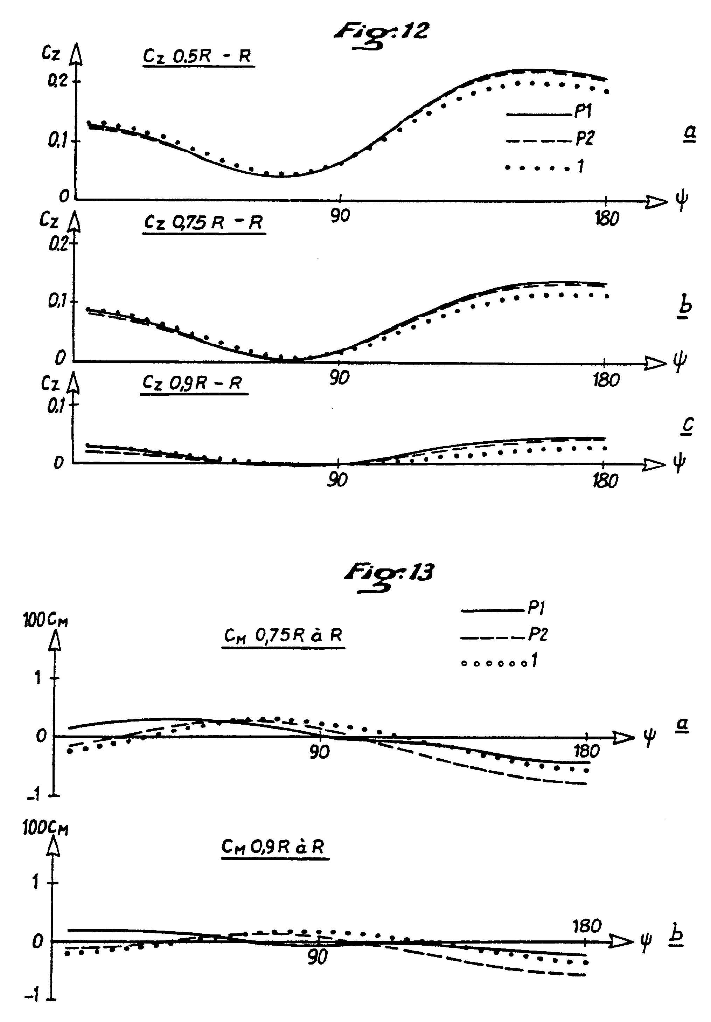

Les schémas a à e de la figure 11 et les schémas a à c de la figure 12 illustrent les avantages de la pale 1 conforme à l'invention, par rapport aux pales P1 et P2 définies ci-dessus, dans une configuration de vol d'avancement rapide (paramètre d'avancement égal à 0,355 associé à un nombre de Mach périphérique d'entraînement du rotor égal à 0,64) pour un coefficient de portance réduite Czm = 0,468 ($\dfrac{CT}{\sigma}$ = 0,078).

Les schémas de la figure 11 donnent les nombre des Mach locaux maximaux MM calculés sur l'extrados en fonction de la distance r à l'axe X-X du rotor (rapportée à l'envergure totale R) pour différents azimuts ψ. Ces schémas montrent l'influence de la pale P2 (forme en plan de la pale 1) pour réduire sur presque tout le secteur de la pale avançante, et de façon significative, les nombres de Mach locaux maximaux en extrémité de pale. Ils montrent également tout l'intérêt de la pale 1, en particulier après l'azimut 120°, pour maintenir des survitesses faibles à l'extrados de l'extrémité, tandis que la pale P2 n'est alors pas beaucoup plus performante que la pale P1.

Les schémas de la figure 12 présentent l'évolution des coefficients de portance Cz calculés en fonction de l'azimut respectivement dans la zone des pales comprise entre les valeurs d'envergure 0,5 R et R (schéma a), 0,75 R et R (schéma b) et 0,9 R et R. Ces schémas montrent que la courbure conforme à l'invention permet en fait de décharger l'extrémité de pale 6 après l'azimut 90°, dans un secteur où les conditions de fonctionnement sont en général les plus sévères. La légère augmentation de portance que ces extrémités subissent avant l'azimut 90° n'est pratiquement pas pénalisante, puisque l'on se trouve dans un secteur azimutal où les effets instationnaires dus à un nombre de Mach incident croissant sont particulièrement favorables pour retarder l'apparition des ondes de choc.

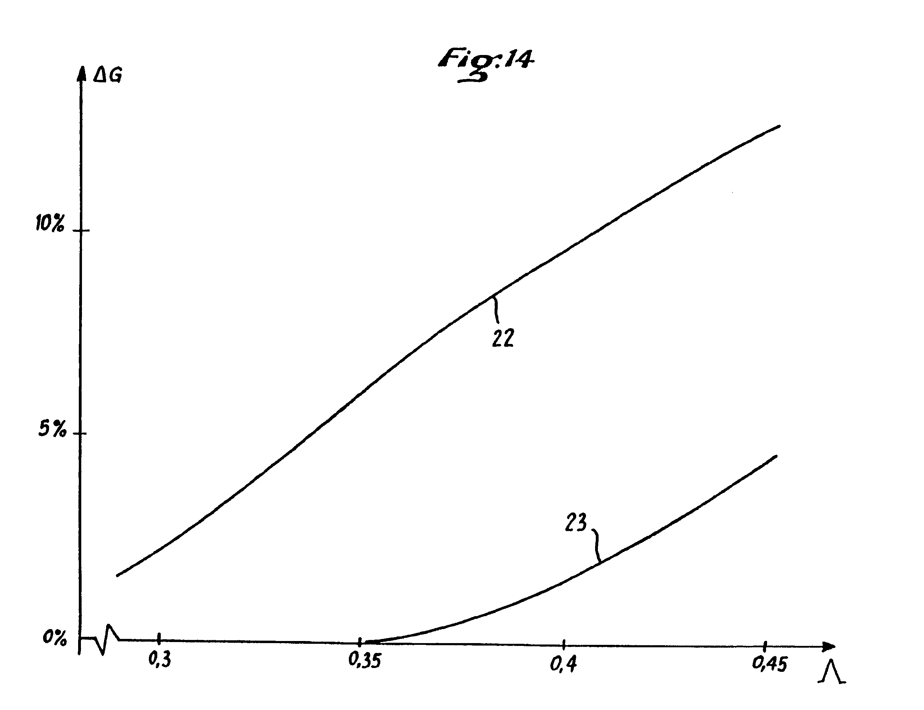

Les schémas a et b de la figure 13 illustrent les moments de torsion calculés $C_M$ en fonction de l'azimut ψ respectivement dans la zone 0,75 R-R et 0,9 R-R. Ces schémas montrent que la courbure continue de l'extrémité 6 selon l'invention permet de rester à un niveau de moment de torsion très comparable à ce qu'il est sur une pale rectangulaire P1, c'est-à-dire à un niveau d'effort de commande des pales nettement inférieur à celui qu'on aurait par une simple mise en flèche de l'extrémité de pale. On notera aussi la possibilité des extrémités courbes 6 de l'invention d'avoir des moments cabreurs (CM > 0) autour de l'azimut 90°, qui permettent de réduire, par effet de dévrillage de la pale, les zones de portance négatives en extrémité de pale.

Sur la figure 14, on a représenté des courbes 22 et 23 représentant le gain de puissance ΔG (en %) en fonction du paramètre d'avancement Λ, défini comme le rapport de la vitesse d'avancement de l'aéronef sur la vitesse périphérique du rotor. La courbe 22 donne le résultat de la comparaison des pales 1 et P1, et la courbe 23 celui de la comparaison des pales 1 et P2. Ces courbes illustrent des gains de puissance de la pale 1 croissant rapidement avec ledit paramètre d'avancement Λ.

**Revendications**

1. Pale pour voiture tournante d'aéronef comportant une attache (3) de fixation à un moyeu (2), une partie courante (5) ayant un bord d'attaque (9) et un bord de fuite (10) et dont le profil (7) a une corde (8) de longueur constante ou évolutive (C), et une extrémité (6) dont l'envergure est inférieure à 10% de l'envergure totale de la pale, qui prolonge ladite partie courante (5) vers l'extérieur et dont le bord d'attaque (14) prolonge en flèche vers l'arrière le bord d'attaque (9) de ladite partie courante (5), ladite extrémité (6) étant de plus inclinée vers le bas, l'inclinaison vers le bas de ladite extrémité de pale (6) s'étendant sur la totalité de l'envergure (a) de cette extrémité et étant continue depuis le raccord (12) avec la partie courante de pale (5) jusqu'au bord extrême (13) de ladite extrémité (6) de sorte que celle-ci suit une courbure telle que son extrados est convexe et son intrados est concave, ladite pale étant rapportée à un système d'axes orthogonaux 0x, 0y et 0z, dont l'origine 0 se trouve au raccord de la ligne de référence (11) de ladite partie courante de pale (5) et de la ligne de référence (16) de ladite extrémité de pale (6), l'axe 0x étant aligné avec la ligne de référence (11) de ladite partie courante (5) et étant orienté vers l'extérieur de la pale, tandis que l'axe 0y est confondu avec la corde (8) du profil (12) de raccord entre ladite partie courante (5) et ladite extrémité (6) et est orienté du bord d'attaque (9, 14) vers le bord de fuite (10, 15) et que l'axe 0z est orienté vers le haut, c'est-à-dire de l'intrados vers l'extrados de la pale, caractérisée en ce que ladite ligne de référence (16) de ladite extrémité de pale (6) est contenue dans un plan x0y passant par l'axe 0x et dont la trace 0y dans le plan y0z fait un angle γ avec l'axe 0y et en ce que, dans le plan x0y, l'équation de ladite ligne de référence (16) de l'extrémité de pale (6) est une fonction d'allure parabolique dans laquelle le coefficient du terme de plus haut degré dépend dudit angle γ.

2. Pale selon la revendication 1, caractérisé en ce que, dans le plan x0y, l'équation de ladite ligne de référence (16) de l'extrémité de pale (6) est de la forme :

$$\frac{Y}{C} = (1 - \frac{d}{c})\,(1 - \alpha)\,f(\gamma)(\frac{x}{a})^n$$

expression dans laquelle :
- C est la longueur de la corde (8) du profil (7) de l'extrémité de la partie courante de pale (5),
- d est la longueur de la corde choisie pour le profil extrême de l'extrémité de pale (6),
- α est la position en corde de pale de la ligne de référence dans ladite extrémité de pale (6),
- f(γ) est une fonction trigonométrique de l'angle γ,
- a est l'envergure de ladite extrémité de pale (6) et,
- n est un exposant compris entre 1,5 et 3.

3. Pale selon la revendication 2, caractérisée en ce que la ligne de référence (16) de ladite extrémité de pale (6) est une parabole pure, la valeur de n étant alors choisie égale à 2.

4. Pale selon la revendication 2, caractérisée en ce que l'angle γ est compris entre 0 et 90°.

5. Pale selon la revendication 4, caractérisée en ce que l'angle γ est compris entre 15° et 30°.

6. Pale selon la revendication 2, caractérisée en ce que l'envergure a de l'extrémité de pale (6) est inférieure ou égale à 1,5 C, mais supérieure ou égale à 0,5 C.

7. Pale selon la revendication 6, caractérisée en ce que l'envergure a de l'extrémité de pale (6) est au moins sensiblement égale à 0,8 C.

8. Pale selon la revendication 2, caractérisée en ce que la corde d du profil extrême (13) de ladite extrémité de pale (6) est comprise entre 0,2 C et 0,6 C.

9. Pale selon la revendication 8, dans laquelle le bord de fuite (15) de ladite extrémité de pale (6) est aligné avec le bord de fuite (10) de ladite partie courante de pale (5), caractérisée en ce que la corde d du profil extrême (13) de l'extrémité de pale (6) est égale à $\frac{C}{3}$.

10. Pale selon la revendication 8, dans laquelle le bord de fuite (15) de ladite extrémité de pale (6) est en flèche par rapport au bord de fuite (10) de la partie courante de pale (5), caractérisée en ce que la corde $\underline{d}$ du profil extrême (13) de l'extrémité de pale (6) est au plus égale à $\frac{C}{2}$.

## Patentansprüche

1. Blatt für ein Drehflügelflugzeug bestehend aus einem Verbindungsstück zum Befestigen an einen Nabenwulst (2), einem laufenden Teil (5) mit einer Vorderkante (9) und einer Hinterkante (10) und einem Profil (7), das eine Sehne (8) von konstanter oder evolutiver Länge (C) auwfeist, und einer Spitze (6), dessen Spannweite kleiner ist als 10% der gesamten Spannweite des Flügels, durch die der laufende Teil (5) nach außen hin verlängert ist und dessen Vorderkante (14) zum hinteren Teil der Vorderkante (9) des laufenden Teils (5) gepfeilt verlängert ist, wobei die Spitze (6) nach unten hin mehr geneigt ist, die Neigung nach unten der Flügelspitze (6) sich über die gesamte Spannweite (a) der Spitze erstreckt und sich von der Verbindung (12) mit dem laufenden Flügelteil (5) bis zur äußersten Kante (13) der Spitze (6) so fortsetzt, daß sie einer derartigen Kurve folgt, daß ihre Oberseite konvex und ihre Unterseite konkav ist, und wobei der Flügel bezogen wird auf ein System senkrecht zueinander stehender Achsen 0x, 0y und 0z, in dem der Nullpunkt 0 an der Verbindung von Bezugslinie (11) des laufenden Fügelteils (5) und Bezugslinie (16) der Flügelspsitze (6) liegt, die Achse 0x mit der Bezugslinie (11) des laufenden Teils (5) fluchtrecht liegt und nach außen vom Flügel ausgerichtet ist, die Achse 0y dagegen mit der Sehne (8) des Verbindungsprofils (12) zwischen dem laufenden Teil (5) und der Spitze zusammenfällt und von der Vorderkante (9, 14) zur Hinterkante (10, 15) ausgerichtet ist, und in dem die Achse 0z nach oben, d.h. von der Flügelunterkante zur Flügeloberkante ausgerichtet ist, dadurch **gekennzeichnet**, daß die Bezugslinie (16) der Flügelspitze (6) sich in einer Ebene x0y fortsetzt, die durch die Achse 0x läuft und dessen Spur 0y in der Ebene y0z mit der Achse 0y einen Winkel $\gamma$ bildet, und daß in der Ebene x0y die Gleichung der Bezugslinie (16) der Flügelspitze (6) eine Funktion der Parabolform ist, bei der der Koeffizient des Ausdrucks höchster Ordnung vom Winkel $\gamma$ abhängt.

2. Flügel nach Anspruch 1, dadurch **gekennzeichnet**, daß in der Ebene x0y die Gleichung der Bezugsline (16) der Flügelspitze (6) wie folgt lautet :

$$\frac{Y}{C} = (1 - \frac{d}{c})(1 - \alpha)\, f(\gamma)\, \left(\frac{x}{a}\right)^n$$

worin C die Länge der Sehne (8) des Profils (7) der Spitze des laufenden Flügelteils (5), d die Länge der für das äußerste Profil der Flügelspitze (6) gewählten Sehne, $\alpha$ die Stellung auf der Flügelsehne der Bezugslinie in der Flügelspitze, $f(\gamma)$ eine trigonometrische Funktion des Winkels $\gamma$, $\underline{a}$ die Spannweite der Flügelspitze (6) und n ein Exponent zwischen 1,5 und 3 ist.

3. Flügel nach Anspruch 2, dadurch **gekennzeichnet**, daß die Bezugslinie (16) der Flügelspitze (6) eine reine Parabel ist, wobei dann der Wert von n gleich 2 gewählt wird.

4. Flügel nach Anspruch 2, dadurch **gekennzeichnet**, daß der Winkel $\gamma$ zwischen 0° und 90° liegt.

5. Flügel nach Anspruch 4, dadurch **gekennzeichnet**, daß der Winkel $\gamma$ zwischen 15° und 30° liegt.

6. Flügel nach Anspruch 2, dadurch **gekennzeichnet**, daß die Spannweite $\underline{a}$ der Flügelspitze (6) kleiner oder gleich 1,5 C jedoch größer oder gleich 0,5 C ist.

7. Flügel nach Anspruch 6, dadurch **gekennzeichnet**, daß die Spannweite $\underline{a}$ der Flügelspitze (6) zumindest etwa gleich 0,8 C ist.

8. Flügel nach Anspruch 2, dadurch **gekennzeichnet**, daß die Sehne $\underline{d}$ des äußersten Profils (13) der Flügelspitze (6) zwischen 0,2 C und 0,6 C liegt.

9. Flügel nach Anspruch 8, bei dem die Hinterkante (15) der Flügelspitze (6) fluchtrecht mit der Hinterkante (10) des laufenden Flügelteils (5) liegt, dadurch **gekennzeichnet**, daß die Sehne $\underline{d}$ des äußersten Profils der Flügelspitze (6) gleich $\frac{C}{3}$ ist.

10. Flügel nach Anspruch 8, bei dem die Hinterkante (15) der Flügelspitze (6) gepfeilt ist in Bezug auf die Hinterkante (10) des laufenden Flügelteils (5), dadurch **gekennzeichnet**, daß die Sehne $\underline{d}$ des äußersten Profils (13) der Flügelspitze (6) höchstens gleich $\frac{C}{2}$ ist.

## Claims

1. Blade for the rotating airfoil of an aircraft having an attachment (3) for fixing to a hub (2), a current part (5) having a leading edge (9) and a trailing edge (10) and whose profile (7) has a chord (8) of constant or evolutive length (C), and a tip (6) whose span is less than 10% of the total span of the blade, which extends said current part (5) outwardly and whose leading edge (14) ex tends the leading edge (9) of said current part (5) rearwardly in a sweep, said tip (6) being in addition downwardly slanted, wherein said downward slant of said blade tip (6) extends over the whole of the span (a) of this tip and is continuous from the connection (12) from the current blade part (5) as far as the end edge (13) of said tip (6) so that said tip follows a curvature such that its extrados is convex and its intrados is concave, said blade being referred to a system of orthogonal axes 0x, 0y and 0z, whose origin 0 is situated at the connection of the reference line (11) of said current blade part (5) and of the reference line (16) of said blade end (6), the axis 0x being aligned with the reference line (11) of said current part (5) and being oriented outwardly of the blade, whereas the axis 0y merges with the chord (8) of the connection profile (12) between said current part (5) and said end (6) and is oriented from the leading edge (9, 14) to the trailing edge (10, 15) and the axis 0z is oriented upwardly, namely from the intrados to the extrados of the blade, characterized in that said reference line (16) of said blade tip (6) is contained in a plane x0y passing through the axis 0x and whose plot 0y in the plane y0z forms an angle $\gamma$ with the axis 0y and, in that, in the plane x0y, the equation of said reference line (16) of said blade tip (6) is a parabolic trend function in which the coefficient of the highest degree term depends on the angle $\gamma$.

2. Blade according to claim 1, characterized in that, in the plane x0y, the equation of said reference line (16) of said blade end (6) is of the form :

$$\frac{Y}{C} = (1 - \frac{d}{c})(1 - \alpha)\, f(\gamma)(\frac{x}{a})^n$$

in which expression :
- C is the length of the chord (8) of the profile (7) of the end of the current blade part (5),
- d is the length of the chord chosen for the end profile of the blade tip (6),
- $\alpha$ is the blade chord position of the reference line in said blade tip (6),
- $f(\gamma)$ is a trigonometric function of the angle $\gamma$,
- a is the span of said blade tip (6) and,
- n is an exponent between 1.5 and 3.

3. Blade according to claim 2, characterized in that the reference line (16) of said blade tip (6) is a pure parabola, the value of n being then chosen equal to 2.

4. Blade according to claim 2, characterized in that the angle $\gamma$ is between 0 and 90°.

5. Blade according to claim 4, characterized in that the angle $\gamma$ is between 15° and 30°.

6. Blade according to claim 2, characterized in that the span a of the blade tip (6) is less than or equal to 1,5 C, but greater than or equal to 0,5 C.

7. Blade according to claim 6, characterized in that the span a of the blade tip (6) is at least substantially equal to 0,8 C.

8. Blade according to claim 2, characterized in that the chord d of the end profile (13) of said blade tip (6) is between 0,2 C and 0,6 C.

9. Blade according to claim 8, in which the trailing edge (15) of said blade tip (6) is aligned with the trailing edge (10) of said current blade part (5), characterized in that the chord d of the end profile (13) of the blade tip (6) is equal to $\frac{C}{3}$.

10. Blade according to claim 8, in which the trailing edge (15) of said blade tip (6) is swept back with respect to the trailing edge (10) of the current blade part (5), characterized in that the chord d of the end profile (13) of the blade tip (6) is at most equal to $\frac{C}{2}$.

Fig.1

# Fig. 2

Fig. 3

Fig. 4

Fig. 5

Fig. 6

Fig. 8

Fig. 7

EP 0 298 826 B1

Fig. 9

Fig. 10

## Fig. 11

Fig.12

Fig.13

Fig:14

EP 0 298 826 B1